# EUROPEAN PATENT APPLICATION

(11) **EP 4 578 617 A1**
(43) Date of publication of application: **02.07.2025**
(21) Application number: 23856763.0
(22) Date of filing: 29.03.2023
(51) Int. Cl.: B29B 17/04

(54) **METHOD AND SYSTEM FOR DRY PHYSICAL-MECHANICAL RECYCLING OF PLASTIC WASTE**

(30) Priority: 26.08.2022 ES 202230772
(71) Applicant: Ecoplaster Sabater, S.L., 46190 Ribarroja de Turia Valencia (ES)
(72) Inventor: SABATER BELENGUER, José, 46190 Ribarroja de Turia Valencia (ES); SABATER BONAFONT, Pablo, 46190 Ribarroja de Turia Valencia (ES); SABATER BONAFONT, Javier, 46190 Ribarroja de Turia Valencia (ES)
(74) Representative: Ungria López, Javier
(86) International application number: PCT/ES2023/070203
(87) International publication number: WO 2024/042253

(57) **Abstract**

The invention relates to a method for dry recycling plastic waste, which comprises the steps of: pre-grinding (10) the waste; drying (20) same mechanically by centrifuging; separating (30) same by density, using a densimetric table, into a lightweight fraction, a medium fraction and a heavy fraction, according to predefined reference values; compacting and heating (40) the lightweight and/or medium fraction of the waste using an extruder; and grinding (60) the material resulting from the previous step to reduce the size thereof to a maximum predetermined value.

## Description

### OBJECT OF THE INVENTION

The present invention belongs to the technical field of waste recycling.

More specifically, the invention relates to the recycling of waste containing plastic, and preferably, but not exclusively, to the recycling of the plastic fraction and the aluminium fraction of waste generated by Brik- and Tetra Brik-type packages.

Therefore, the present invention contributes to standardising and reducing the cost of the process for recycling plastic fractions mixed with metals (for example, plastic mixed with aluminium particles, which results in a material called PolyAl), in both industrial waste and household waste originating from a prior cardboard and cellulose fibre separation process. However, the method according to the present invention can also be used to recycle any lightweight plastic, such as low-density polyethylene (LDPE), polypropylene (PP) and high-density polyethylene (HDPE).

Likewise, another object of this invention is to recover and recycle waste containing plastic; using said plastic, a plastic mixture or a resulting compound (for example, PolyAl) as raw materials, thereby preventing the deposition of said waste in landfills or its incineration.

### TECHNICAL PROBLEM TO BE SOLVED AND BACKGROUND OF THE INVENTION

The Swedish company Tetra Pak revolutionised the packaging market in 1963 by launching its Tetra Brik package (registered trademark) which, being waterproof and hermetically sealed, allowed storing a wide variety of liquids (such as beverages and liquid foods) and transporting them to their place of consumption without leakage or significant deterioration of their organoleptic properties.

Tetra Brik packages have a tetrahedron shape and are formed from several thin sheets of plastic (usually LDPE and PP), cardboard and aluminium foil, arranged in superimposed layers and glued together. Said packages typically have a total of six different layers.

The so-called Brik-type packages, which are formed by the same material as Tetra Brik packages, but do not have a tetrahedral shape, are also known.

Although Brik- and Tetra Brik-type packages are well established and widely used in Spain, the complexity of said packages prevent them from being correctly recycled.

In fact, often only the cardboard fraction of the Brik- and Tetra Brik-type packages is recycled, while the plastic and aluminium fractions (which account for about 25% of the total weight) are not usually recycled, since it is not economically viable.

In view of this, new inventions intended for allowing the recycling of the plastic and aluminium fractions of waste originating from Brik- and Tetra Brik-type packages have recently been proposed within the sector, such as those disclosed, for example, in Spanish patent ES2866164, resulting from the validation of European Patent No. EP3661313.

However, the methods and systems disclosed in said patent ES2866164 include a washing phase in an aqueous formic acid solution which is undesirable environmentally speaking (as it is highly polluting) and which furthermore significantly increases the cost of the method for recycling waste and producing plastic from same.

### DESCRIPTION OF THE INVENTION

The present invention seeks to address the limitations of the prior art indicated above and to provide an alternative thereto.

To that end, a first object of the present invention relates to a method for recycling waste containing plastic, characterised in that it comprises the following steps:
i) pre-grinding the waste to reduce the size thereof to a maximum predetermined value;
ii) drying the waste mechanically by centrifuging;
iii) separating the waste by density, using a densimetric table, into the following fractions: a lightweight fraction, a medium fraction and a heavy fraction, according to predefined reference values;
iv) compacting and heating the lightweight fraction and/or the medium fraction of the waste using an extruder working at a first predetermined temperature, to obtain a homogeneous material; and
v) grinding the material resulting from the previous step to reduce the size thereof to a maximum predetermined value, or alternatively cutting said material resulting from the previous step to form chipping or granules (pellets) of a predetermined size and cooling said chipping or granules until they reach a second predetermined temperature.

Preferably, the waste used in the method for recycling of the present invention is waste from Brik- and Tetra Brik-type packages originating from a prior cardboard and cellulose fibre separation process.

Furthermore, the predefined reference value used for separating the waste by density in step iii) is such that the aluminium foil and plastic particles of the Brik- and Tetra Brik-type packages are part of the lightweight fraction and the medium fraction of the waste. In this particular case, the homogeneous material obtained in step iv) indicated above is PolyAl, an abundant material already known in the sector, but which in many cases, for example, due to cost considerations, could not be reused and ended up in landfills. However, as a result of the present invention, the quality of said PolyAl is improved and its production cost reduced, which allows using it as a recycled material of plastic origin in the production of elements such as, for example, street furniture, flowerpots, boxes, pallets, bricks and/or chairs.

Preferably, drying step ii) of the method for recycling according to the present invention also comprises separation by sieving. Impurities such as, for example, dust, small particles and organic matter, are thereby removed.

Likewise, step iv) of compacting and heating the lightweight fraction and/or the medium fraction of the waste also preferably includes melting said lightweight fraction and/or said medium fraction of the waste using an extruder working at a first predetermined temperature.

Furthermore, in those cases in which step v) comprises grinding the resulting material, a cooling step is carried out between step iv) of compacting and heating the lightweight fraction and/or the medium fraction of the waste and said step v) of grinding.

In one embodiment of the invention, step v) comprises cutting the resulting material with a head cutting system integrated in the extruder and then cooling with a water-cooling unit. This particular embodiment of the invention is particularly recommended for the formation of chipping.

Alternatively, step v) may also comprise cutting the resulting material with a cutting system independent of the extruder and then cooling by means of an air-cooling unit. This particular embodiment of the invention is particularly recommended for the formation of granules (pellets) that can then be ground.

The method for recycling according to the present invention may further comprise the following additional step:
vi) bagging the material resulting from the previous grinding or cutting step v).

In a preferred embodiment of the invention, the method for recycling further comprises subjecting the heavy fraction of the waste to a conventional recycling sub-process which includes the following steps:
a) washing the heavy fraction of the waste in a stirred tank-type vessel and separating same by densities into two different portions: a reusable plastic material portion (floating material) and a leftover portion (sunken material);
b) rinsing the reusable plastic material portion; and
c) drying the reusable plastic material portion.

In the method for recycling according to the present invention, the leftover portion mentioned in the preceding paragraph is preferably used to produce alternative fuels or waste-derived fuels.

The method for recycling waste according to the present invention has, among others, the following advantages:
- as a result of said method, it is not necessary to wash all the waste to be recycled with water, rather on the contrary, said waste is sorted and separated into two three different fractions by density (i.e., a heavy phase, a medium phase and a lightweight phase). The lightweight fraction from said obtained fractions is considered suitable for the production of elements from recycled material of plastic origin. This allows eliminating most pollutants, such as cellulose fibres, water, metals, wood, stones and dust, from the process, making it easier to obtain said recycled material of plastic origin. Furthermore, the high costs associated with the washing steps are reduced and the method becomes more sustainable as it does not require water (at least for recycling the lightweight fraction and the medium fraction of the waste). In fact, water may only be used in the heavy fraction recycling sub-process.
- the homogeneous material resulting from the grinding or cutting step v) and originating from the lightweight phase of the waste does not have to be filtered using metal meshes or laser filters, as typically occurs in traditional recycling processes in the extrusion part, reducing cost and waste generation. If the waste used in the method for recycling of the present invention is waste from Brik- and Tetra Brik-type packaging originating from a prior cardboard and cellulose fibre separation process and the value used for separating the waste by density is suitably chosen, said resulting homogeneous material is PolyAl, the advantages of which have already been described above;
- the waste is better utilized since each of the different fractions obtained can be utilized in some way. Therefore, the lightweight fraction can be used directly to produce elements from recycled material of plastic origin (for example, PolyAl), whereas the heavy fraction can be subjected to a traditional recycling sub-process from which there are extracted, on one hand, additional reusable plastic material (i.e., the reusable plastic material portion), and on the other hand, a leftover portion which can be used for energy recovery, preferably being used in the preparation of alternative fuels. In view of the foregoing, the method for recycling of the invention allows the amount of waste remaining after the application of said method to be substantially zero; and
- lastly, the lightweight fraction and/or the medium fraction of the waste, which can be used in the production of recycled plastic, have, after processing, a homogeneity and a specific weight allowing the transport thereof in a more sustainable manner and the use thereof in new applications, avoiding preexisting limitations that are derived from the technical characteristics of the traditional injectors/extruders used in the production of virgin plastic materials and not adapted to recycled materials.

A second aspect of present invention relates to a system for recycling plastics, characterised in that it comprises at least the following elements:
- first grinding means, configured for pre-grinding the waste to reduce the size thereof to a maximum predetermined value;
- drying means, configured for drying the waste mechanically by centrifuging;
- a densimetric table, configured for separating the waste, according to a predefined reference value, into a lightweight fraction, a medium fraction and a heavy fraction;
- an extruder, configured for compacting and heating the lightweight fraction and/or the medium fraction of the waste at a predetermined temperature, to obtain a homogeneous material; and
- second grinding means, arranged downstream of the extruder and intended for grinding the homogeneous material to reduce the size thereof to a maximum predetermined value, or alternatively a cutting system arranged downstream of the extruder and intended for cutting the homogeneous material to form chipping or granules of a predetermined size, with cooling means for cooling the formed chipping or granules being furthermore provided.

In a preferred embodiment of the system for recycling plastics according to the present invention, the extruder is furthermore configured for compacting and heating the lightweight and/or medium fraction of the waste, so as to melt said lightweight and/or medium fraction of the waste.

### DESCRIPTION OF THE FIGURES

As a complement to the description provided herein, and for the purpose of helping to make the technical features of the invention more readily understandable, in accordance with preferred practical exemplary embodiments thereof, said description is accompanied by a set of drawings constituting an integral part of the same, which by way of illustration and not limitation, depict the following:
Figure 1 shows a block diagram listing the steps involved in two possible methods for recycling according to the present invention; and
Figure 2 shows a block diagram listing the steps of a possible sub-process for recycling the heavy fraction of the waste, obtained in the separation step of the method for recycling of Figure 1.

### DESCRIPTION OF AN EMBODIMENT OF THE INVENTION

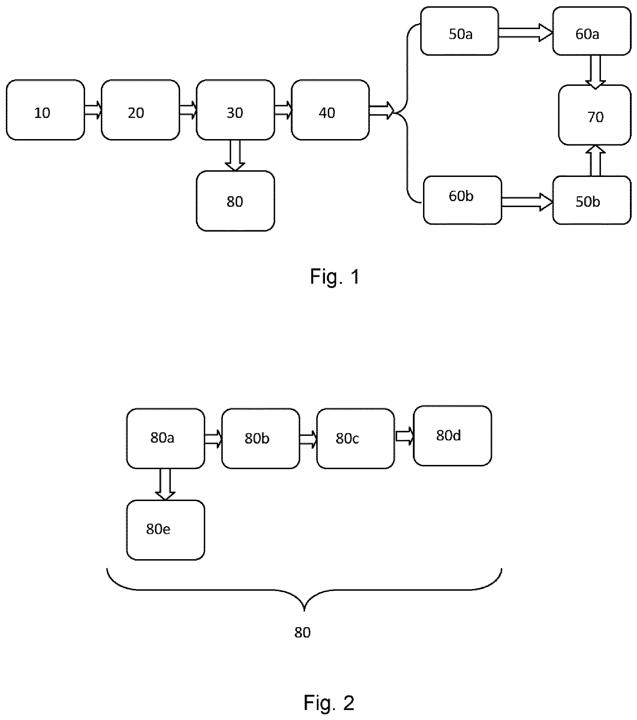

A detailed explanation of a preferred exemplary embodiment of the present invention is provided below with the help of the attached Figures 1 and 2.

Figure 1 shows a flow chart listing the steps involved in two possible methods for recycling according to the present invention.

In this particular case, the waste used in the method for recycling is waste from Brik- and Tetra Brik-type packages originating from a prior cardboard and cellulose fibre separation process.

The first step (10), which is common to both methods for recycling, consists of pre-grinding the waste to reduce its size to a maximum value 30 mm, using to that end a blade-type grinder. Possible bottlenecks in the line are thereby prevented.

The waste is then conveyed to a hopper connected to a feed line. The waste is directed using endless screws to a drying area in which a second step (20), common to both methods for recycling, is performed, in which the waste is dried mechanically by centrifuging. The centrifugation speed is 1,500-3,000 rpm and separation by sieving is furthermore performed to remove dust, small particular and organic matter.

The waste is then conveyed by air to a densimetric table. Said table carries out a step (30) of separating the waste, by density, into a lightweight fraction, a medium fraction and a heavy fraction, according to a predefined reference value. This third step (30) is also common to both methods for recycling according to the present invention.

In these particular cases, the heavy fraction is made up mainly of plastics of higher density than LDPE (such as PP originating from the caps of the packages and HDPE originating from said packages), plastics with fillers, metals, stones and cellulose. In turn, the lightweight fraction is made up mainly of LDPE and aluminium.

Then, in both methods for recycling according to the invention, the heavy fraction is subjected to a conventional recycling sub-process (80), whereas the lightweight fraction passes to an extruder working at a temperature of between 120 and 220°C in which a compacting and heating step (40) is carried out to obtain a homogeneous material which is PolyAl in this specific case.

The compacting step (40) is also common to both processes. However, from this point onwards, each of the methods for recycling follows subsequent steps that are slightly different from each other.

In that sense, in the first method for recycling, hot PolyAl exits the extruder, so in this particular embodiment of the invention, said material is subjected to a cooling step (50a) performed in this particular case by fans, while it moves along a conveyor belt until it reaches room temperature.

The PolyAl is then subjected to a grinding step (60a) performed by a blade grinder, until the size of the particles of said material is of a maximum value of between 12 and 15 mm.

Lastly, the ground PolyAl is conducted to a bagging line by means of endless screws. Once in said line, it is subjected to a bagging step (70) in which it is introduced in Big Bag-type (trade name) industrial sacs. Each of the cases is controlled and weighed for subsequent distribution to a plant for the production of elements from recycled materials of plastic origin.

On the contrary, in the second method for recycling, PolyAl is cut (60b) first with a head cutting system integrated in the extruder itself and then cooled (50b) with a water-cooling unit.

Lastly, the cut PolyAl is conducted to a bagging line by means of endless screws. Once in said line, it is subjected to a bagging step (70) which is essentially identical to that of the first method for recycling described above.

In the examples shown in Figure 1, the lightweight and medium fractions (obtained in step (30) of separation by density) represent about 50% by weight of the total waste used in both methods for recycling, while about 20% by weight of the waste would be water that would be removed mainly along the drying step (20) and the compacting and heating step (40). The remaining 30% by weight would in turn correspond to the heavy fraction, which would be subjected to a conventional recycling sub-process (80) illustrated in Figure 2, and after which, about 20% by weight would be recovered as plastic and metals, and the remaining 10% would be subjected to energy recovery, preferably being used in the preparation of alternative fuels.

Figure 2 lists the steps of a possible sub-process (80) for recycling the heavy fraction of the waste obtained in the separation step of the methods for recycling of Figure 1.

Said sub-process (80) begins with a step (80a) of washing the heavy fraction of the waste in a stirred tank-type vessel, in which said waste is separated by densities into two different portions: a reusable plastic material portion (corresponding to the material floating on the surface of the washing liquid) and a leftover portion (corresponding to the materials deposited at the bottom of the vessel).

Next, the reusable plastic material portion is subjected to a rinsing step (80b) and then a drying step (80c). Once the reusable plastic material is dry, it is bagged in step (80d).

In turn, the leftover portion is subjected to energy recovery step (80e), being used in the preparation of alternative fuels.

The present invention is in no way limited to the embodiments herein disclosed. For a person skilled in the art, other possible different embodiments of this invention will be evident in light of the present description. As a result, the scope of protection of the present invention is exclusively defined by the claims that follow.

## Claims

1. A method for dry physical-mechanical recycling of plastic waste, **characterised in that** it comprises the following steps:
i) pre-grinding (10) the waste to reduce the size thereof to a maximum predetermined value;
ii) drying (20) the waste mechanically by centrifuging;
iii) separating (30) the waste by density, using a densimetric table, into a lightweight fraction, medium fraction and a heavy fraction, according to a predefined reference value;
iv) compacting and heating (40) the lightweight fraction and/or the medium fraction of the waste using an extruder working at a first predetermined temperature, to obtain a homogeneous material; and
v) grinding (60a) the material resulting from the previous step (iv) to reduce the size thereof to a maximum predetermined value, or alternatively cutting (60b) said material resulting from the previous step to form chipping or granules of a predetermined size and cooling (50b) said chipping or granules until they reach a second predetermined temperature.

2. The method for recycling according to claim 1, wherein the waste is waste from Brik- and Tetra Brik-type packages originating from a prior cardboard and cellulose fibre separation process.

3. The method for recycling according to claim 2, wherein, furthermore, the predefined reference value used for separating the waste by density in step (30) is such that the aluminium foil and plastic particles of the Brik- and Tetra Brik-type packages are part of the lightweight and medium fraction of the waste.

4. The method for recycling according to any of the preceding claims, which further comprises the following additional step:
vi) bagging (70) the material resulting from grinding step (60a) or cutting step (60b).

5. The method for recycling according to any of the preceding claims, which further comprises subjecting the heavy fraction of the waste to a recycling sub-process (80) which includes the following steps:
a) washing (80a) the heavy fraction of the waste in a stirred tank-type vessel and separating same by densities, into two different portions: a reusable plastic material portion and a leftover portion;
b) rinsing (80b) the reusable plastic material portion; and
c) drying (80c) the reusable plastic material portion.

6. The method for recycling according to claim 5, which further comprises using the leftover portion to produce fuels.

7. The method for recycling according to any of the preceding claims, wherein the drying step (20) also comprises separation by sieving.

8. The method for recycling according to any of the preceding claims, wherein a cooling step (50a) is carried out between the step (40) of compacting and heating the lightweight fraction and/or the medium fraction of the waste and the step (60a) of grinding the resulting material.

9. The method for recycling according to any of the preceding claims, wherein the compacting and heating step (40) also includes melting the lightweight fraction and/or the medium fraction of the waste using an extruder working at a first predetermined temperature.

10. The method for recycling according to any of the preceding claims, wherein in cutting step (60b), the material resulting from the previous step is cut using a head cutting system integrated in the extruder and then cooled (50b) with a water-cooling unit.

11. The method for recycling according to any of claims 1 to 9, wherein in cutting step (60b), the material resulting from the previous step is cut using a cutting system independent of the extruder and then cooled (50b) by means of an air-cooling unit.

12. A system for dry physical-mechanical recycling of plastic waste, **characterised in that** it comprises at least the following elements:
- first grinding means, configured for pre-grinding the waste to reduce the size thereof to a maximum predetermined value;
- drying means, configured for drying the waste mechanically by centrifuging;
- a densimetric table, configured for separating the waste, according to a predefined reference value, into a lightweight fraction, a medium fraction and a heavy fraction;
- an extruder, configured for compacting and heating the lightweight and/or medium fraction of the waste at a predetermined temperature, to obtain a homogeneous material; and
- second grinding means, arranged downstream of the extruder and intended for milling the homogeneous material to reduce the size thereof to a maximum predetermined value, or alternatively a cutting system arranged downstream of the extruder and intended for cutting the homogeneous material to form chipping or granules of a predetermined size, with cooling means for cooling said chipping or granules being furthermore provided.

13. The system for dry physical-mechanical recycling of plastic waste according to claim 12, wherein the extruder is further configured for melting the lightweight fraction and/or the medium fraction of the waste.
